# EUROPÄISCHE PATENTANMELDUNG

(11) **EP 0 559 012 A1**
(43) Veröffentlichungstag der Anmeldung: **08.09.1993**
(21) Anmeldenummer: 93102593.6
(22) Anmeldetag: 19.02.1993
(51) Int. Cl.: C02F 11/12, F26B 3/28

(54) **Verfahren und Anlage zum Trocknen von Faulschlamm**

(30) Priorität: 05.03.1992 DE 4206963; 12.05.1992 DE 4215530; 14.05.1992 DE 4215933
(71) Anmelder: Enning, Hans Jürgen, D-45665 Recklinghausen (DE)
(72) Erfinder: Enning, Hans Jürgen, D-45665 Recklinghausen (DE)
(74) Vertreter: Andrejewski, Walter, Dr.

(57) **Zusammenfassung**

Verfahren zum Betrieb einer Anlage zum Trocknen von Faulschlamm, welche Anlage zumindest einen kontinuierlichen Förderer für den Roh-Faulschlamm (16) und eine Einrichtung für eine Strahlungstrocknung (14) des Roh-Faulschlammes aufweist. In einer ersten, an die Rohschlammaufgabe anschließenden Zone (18) wird eine thermische Trocknung bis zum Beginn der Ausbildung einer Leimphase durchgeführt. In der anschließenden zweiten Zone (19) wird die Strahlungstrocknung so eingerichtet, daß die entstehende Leimphase in der zweiten Zone in Konglomerate transformiert wird, die schüttgutartig förderbar sind. Die Konglomerate (21) sind von dem kontinuierlichen Förderer abwerfbar. Auch Anlagen die für das Verfahren besonders geeignet sind, werden angegeben.

## Beschreibung

Die Erfindung betrifft allgemein ein Verfahren zum Betrieb einer Anlage zum Trocknen von Faulschlamm. Die Erfindung betrifft konkreter ein Verfahren zum kontinuierlichen Trocknen von Faulschlamm, der einen Trockensubstanzgehalt von 15 bis 30 Gew.-%, vorzugsweise von etwa 25 Gew.-% aufweist. Die Erfindung betrifft insbesondere ein Verfahren zum Betrieb einer Anlage zum Trocknen von Faulschlamm welche Anlage eine Trocknungskammer, zumindest einen Heizstrahler im oberen Bereich der Trocknungskammer für eine Strahlungstrocknung und zumindest einen Schneckenförderer mit nach oben offener Förderrinne und Förderschnecke sowie einen Brüdenabzug aufweist, wobei der Heizstrahler oberhalb und längs der Förderrinne angeordnet ist und der Roh-Faulschlamm an einer Seite des Schneckenförderers mit einem Trockensubstanzgehalt von 15 bis 30 Gew.-%, vorzugsweise von etwa 25 Gew.-%, aufgegeben und von dem Schneckenförderer mit erhöhtem Trockensubstanzgehalt abgegeben wird. Die Trocknungskammer ist mit einem Brüdenabzug versehen. Die Erfindung betrifft fernerhin Anlagen für die Durchführung solcher Verfahren. - Faulschlamm bezeichnet im Rahmen der Erfindung ausgefaulten Überschußschlamm aus biologischen Abwasserreinigungsanlagen. Die Ausfaulung des Überschußschlammes geschieht in besonderen Anlagen, die mit Faultürmen ausgerüstet sind. Roh-Faulschlamm bezeichnet Faulschlamm, wie er in das erfindungsmäße Verfahren bzw. in die erfindungsgemäße Anlage eingeführt wird, zumeist nach mechanischer Entwässerung.

Im Rahmen der vorstehend beschriebenen, aus der Praxis bekannten, Maßnahmen, von denen die Erfindung ausgeht, wird dem Verfahren als Rohschlamm Klärschlamm zugeführt, wie er als Überschußschlamm aus einer ein- oder mehrstufigen biologischen Abwasserreinigungsanlage abgezogen wird, wenn auch nach mechanischer Entwässerung. Dabei können, je nach Provenienz und Zusammensetzung des Rohschlammes, Störungen auftreten, und zwar deshalb, weil die Schlammförderung bei der durchzuführenden Behandlung in der Anlage versagt. Das beruht auf der Bildung einer sogenannten Leimphase. Die Leimphase, das heißt der gebildete Leim, steht einer Förderung mittels Schneckenförderer entgegen. Die Bildung der Leimphase ist temperaturabhängig. Tritt die Leimphase auf, so wird der Klärschlamm, der zunächst eine erdähnliche, gleichsam krümelige Konsistenz aufweist, in einen pasteusen, hochviskosen Zustand überführt. Die Störungen sind besonders ausgeprägt, wenn nicht Klärschlamm, wie er als Überschußschlamm aus einer mehrstufigen Abwasserreinigungsanlage anfällt, aufgegeben wird, sondern ausgefaulter Klärschlamm, der bei einer Faulbehandlung des Klärschlammes in einem Faulturm entsteht. Um im Rahmen der bekannten Maßnahmen den Schlammtransport bei der Trocknungsbehandlung sicherzustellen, wird die Struktur des Rohschlammes bzw. des Roh-Faulschlammes durch Beimischungen verändert, die den Trockensubstanzgehalt erhöhen. Dabei kann es sich um die Beimischung von Fremdstoffen handeln. Es ist aber auch bekannt und üblich, den getrockneten Schlamm selbst zurückzuführen. Dadurch wird das Volumen des in der Leimphase entstehenden Leimes so weit reduziert, daß die Förderungsfähigkeit mit einem Schneckenförderer erhalten bleibt. Die Beimischung der Fremdstoffe und/oder des getrockneten Schlammes selbst muß sehr homogen erfolgen und ist betriebsmäßig entsprechend aufwendig, zumal eine betriebsmäßige Anpassung an die Provenienz des Ausgangsschlammes erforderlich ist. Um die beschriebenen Probleme zu minimieren, ist es bekannt, für die Trocknung des Klärschlammes nicht Schneckenförderer, sondern andere Apparate, nämlich Trommeltrockner und Scheibentrockner einzusetzen.

Der Erfindung liegt die Aufgabe zugrunde, das eingangs beschriebene Verfahren so zu führen, daß eine störende Bildung einer Leimphase nicht mehr auftritt.

Gegenstand der Erfindung ist allgemein ein Verfahren zum Betrieb einer Anlage zum Trocknen von Faulschlamm, welche Anlage zumindest einen kontinuierlichen Förderer für den Roh-Faulschlamm und eine Einrichtung für eine Strahlungstrocknung des Roh-Faulschlammes aufweist, wobei in einer ersten, an die Rohschlammaufgabe anschließenden Zone eine thermische Trocknung bis zum Beginn der Ausbildung einer Leimphase durchgeführt wird, wobei in der anschließenden zweiten Zone die Strahlungstrocknung so eingerichtet wird, daß die entstehende Leimphase in der zweiten Zone in Konglomerate transformiert wird, die schüttgutartig förderbar sind, und wobei die Konglomerate von dem kontinuierlichen Förderer abwerfbar sind. - Leimphase bezeichnet auch im Rahmen der Erfindung gleichsam eine Phasenumbildung des in der ersten Zone vorgetrockneten Rohschlammes, der eine erdige bis krümelige Konsistenz aufweist, in einen pasteusen, hochviskosen Zustand. Konkreter ist zur Lösung der angegebenen Aufgabe Gegenstand der Erfindung ein Verfahren zum Betrieb einer Anlage zum Trocknen von Faulschlamm, welche Anlage eine Trocknungskammer, zumindest einen Heizstrahler im oberen Bereich der Trocknungskammer und zumindest einen Schneckenförderer mit nach oben offener Förderrinne und Förderschnecke sowie einen Brüdenabzug aufweist, wobei der Heizstrahler oberhalb und längs der Förderrinne angeordnet ist und der Roh-Faulschlamm an einer Seite des Schneckenförderers mit einem Trockensubstanzgehalt von 15 bis 30 Gew.-%, vorzugsweise 25 Gew.-%, aufgegeben wird und von dem Schneckenförderer mit erhöhtem Trockensubstanzgehalt abgegeben wird, und wobei die Kombination der folgenden Merkmale verwirklicht wird
a) die Strahlungstrocknung in dem Schneckenförderer wird in zumindest zwei Zonen durchgeführt,
b) in der ersten Zone werden längs des Förderweges des Schneckenförderers eine Erhitzung sowie eine damit verbundene thermische Trocknung des Roh-Faulschlammes bis zum Beginn der Leimphase durchgeführt,
c) die Fördergeschwindigkeit, das Volumen des Roh-Faulschlammes und die Strahlungsintensität der Strahlungstrocknung werden in der Behandlungsstufe der zweiten Zone so eingerichtet, daß die entstehende Leimphase in der zweiten Zone in schneckenförderfähige Konglomerate zerfällt,
wobei die Konglomerate aus der Förderrinne ausgetragen werden.

Zur Lösung der angegebenen Aufgabe ist Gegenstand der Erfindung auch ein Verfahren zum kontinuierlichen Trocknen von Faulschlamm der einen Trockensubstanzgehalt von 15 bis 30 Gew.-%, vorzugsweise etwa 25 Gew.-%, aufweist, wobei die Kombination der folgenden Verfahrensschritte verwirklicht ist:
a) Der Roh-Faulschlamm wird einem Bandförderer, der an seinem Ende eine Abwurfeinrichtung aufweist, in Form einer Rohschlammschicht aufgegeben,
b) die Rohschlammschicht wird mit Hilfe einer Strahlungstrocknungseinrichtung, die sich oberhalb und längs des Bandförderers erstreckt, einer Strahlungstrocknung unterworfen, die zwei Trocknungszonen aufweist,
c) in der ersten, an die Rohschlammaufgabe anschließenden Zone wird eine thermische Trocknung bis zum Beginn der Leimphase durchgeführt,
d) die Fördergeschwindigkeit, die Dicke der Rohschlammschicht und Strahlungsintensität der Strahlungstrocknung werden so eingerichtet, daß die entstehende Leimphase am Ende der zweiten Zone von dem Bandförderer in Form von schneckenförderfähigen Konglomeraten abnehmbar oder abwerfbar ist,
wobei die Konglomerate in einen angeschlossenen beheizten Schneckenförderer eingeführt und in diesem einer Nachtrocknung unterworfen werden. Dabei kann die Rohschlammschicht zusätzlich über das Förderband beheizt werden.

Die Erfindung geht von der Erkenntnis aus, daß die Leimphase fördertechnisch nicht durchfahren werden muß, sondern fördertechnisch gleichsam übersprungen werden kann, wenn dafür gesorgt wird, daß der gebildete Leim, gleichsam im Augenblick des Entstehens, ausgetrocknet wird. Das wird erfindungsgemäß dadurch erreicht, daß die wesentlichen Betriebsparameter, nämlich die Fördergeschwindigkeit, das Volumen des Roh-Faulschlammes und die Strahlungsintensität der Strahlungstrocknung so eingerichtet werden, daß die entstehende Leimphase in der zweiten Zone in schneckenförderfähige Konglomerate zerfällt. Die Strahlungstrocknung in den beiden Zonen kann mit unterschiedlicher Strahlungsintensität durchgeführt werden. Nach bevorzugter Ausführungsform der Erfindung wird die zweite Behandlungszone eingeleitet, wenn die Temperatur des Faulschlammes auf seinem Weg durch die Trocknungskammer auf über 100°C ansteigt oder gerade angestiegen ist. Es ist eine Frage der Einstellung der Betriebsparameter, um optimierend zu erreichen, daß in der zweiten Zone die entstehende Leimphase in statu nascendi der konglomeratbildenden Strahlungstrocknung ausgesetzt wird und ihren hochviskosen förderungshemmenden Charakter sehr plötzlich verliert. Das kann schon zu Beginn der zweiten Zone geschehen. Ohne weiteres läßt sich im Rahmen des erfindungsgemäßen Verfahrens eine sehr hohe Fördergeschwindigkeit und im Ergebnis eine hohe Durchsatzleistung verwirklichen. Es kann im Rahmen der Erfindung ohne Fremdstoffbeimischung gearbeitet werden und insbesondere auch ohne Trockengutrückführung.

Es empfiehlt sich, die Rohschlammschicht in dem Förderer oder auf dem Förderer bis zu einem Trockensubstanzgehalt von zumindest 65 Gew.-% zu trocknen.

Es versteht sich, daß in der zweiten Zone die sich bildenden Konglomerate und die gebildeten Konglomerate einer Durchmischung unterworfen werden können.

Im folgenden wird die Erfindung und werden für die erfindungsgemäßen Verfahren geeignete Anlagen anhand einer lediglich ein Ausführungsbeispiel darstellenden Zeichnung ausführlicher erläutert. Es zeigen
- Fig. 1: das Schema einer erfindungsgemäßen Anlage,
- Fig. 2: in gegenüber der Fig. 1 vergrößertem Maßstab einen Schnitt durch die offene Förderrinne mit darin angeordneter Förderschnecke,
- Fig. 3: einen Schnitt in Richtung A-A durch den Gegenstand nach Fig. 2 und
- Fig. 4: das Schema einer anderen erfindungsgemäßen Anlage.

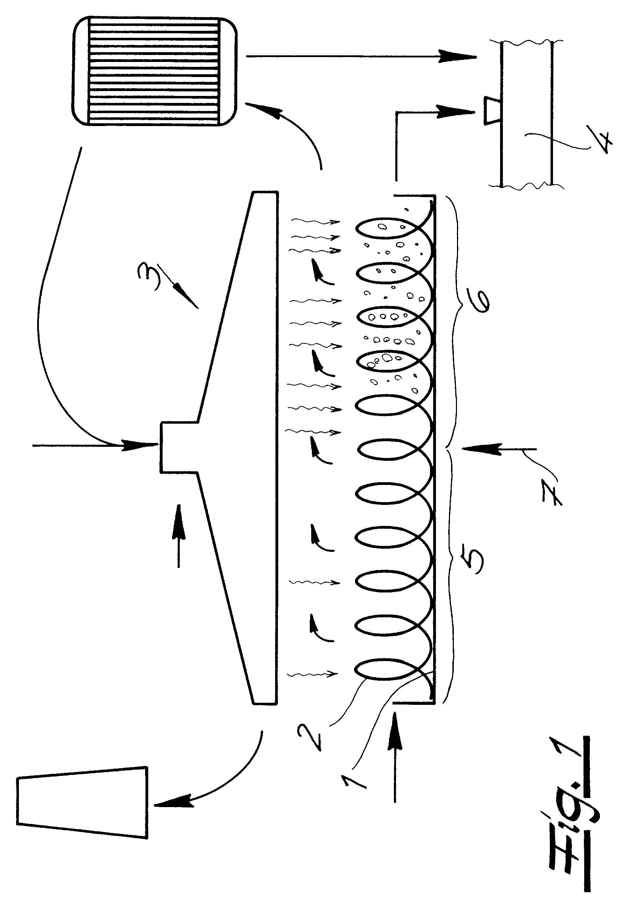

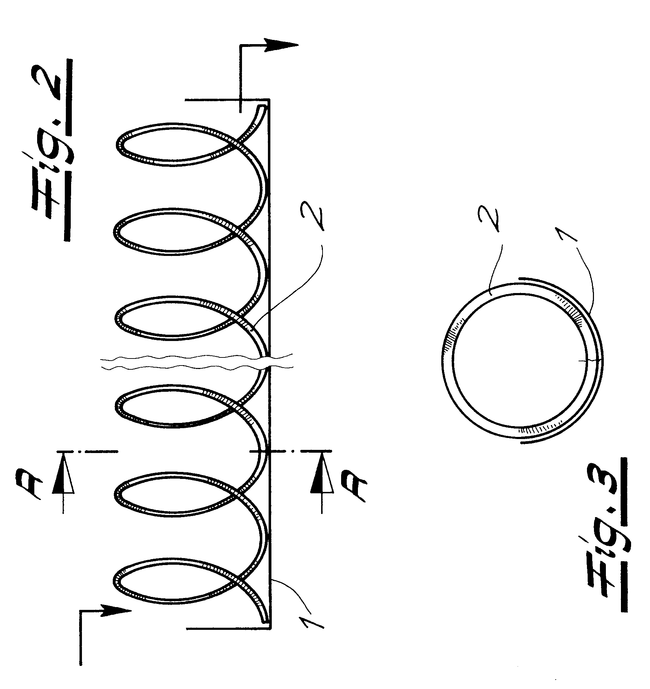

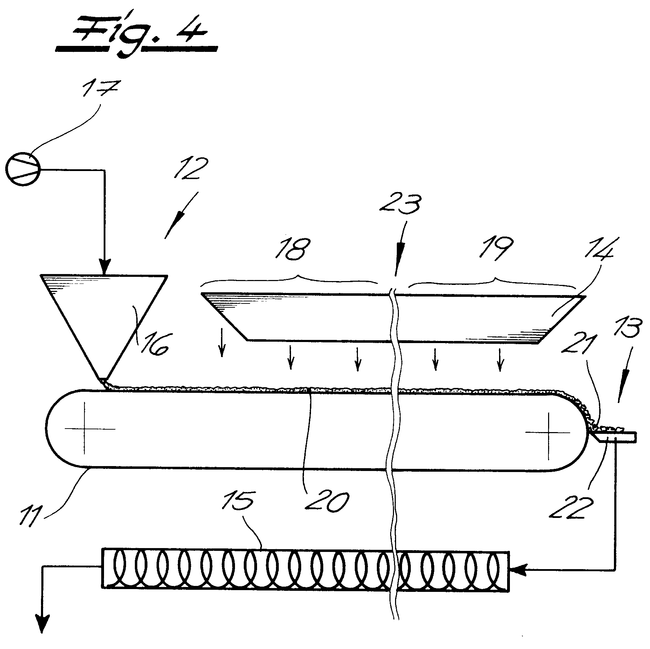

Die in den Figuren 1 bis 3 dargestellte Anlage ist für die Durchführung des vorstehend beschriebenen Verfahrens eingerichtet, bei dem mit einem Schneckenförderer gearbeitet wird. Zum grundsätzlichen Aufbau gehören eine offene Förderrinne 1 und eine darin angeordnete Förderschnecke 2, eine Strahlungstrocknungseinrichtung 3 mit zumindest einem Heizstrahler und ein nachgeschalteter Förderer 4. Die Förderrinne 1 weist eine erste Trocknungszone 5 und eine zweite Trocknungszone 6 auf, die über einen Bereich 7 beginnender Leimphasenbildung ineinanderübergehen. Die Fördergeschwindigkeit in der Förderrinne 1 sowie die Strahlungstrocknungseinrichtung 3 bezüglich der Strahlungsintensität sind so eingerichtet, daß die sich bildende Leimphase in Konglomerate zerfällt, die schneckenförderbar sind. Der nur angedeutete, nachgeschaltete Förderer 4 ist für die Nachtrocknung der Konglomerate eingerichtet. Man erkennt aus einer vergleichenden Betrachtung der Figuren 2 und 3, daß die offene Förderrinne 1 eine offene schraubenwendelförmige Förderschnecke 2 aufweist. Der nachgeschaltete Förderer 4 könnte als Schneckenförderer mit geschlossenem Förderschneckenzylinder und geschlossener Förderschnecke ausgebildet sein. Die offene Förderschnecke und/oder der Schneckenzylinder des nachgeschalteten Förderers 4 sind zweckmäßigerweise zusätzlich durch ein fluides Medium beheizt. Die Strahlungstrocknungseinrichtung 3 in der ersten Trocknungszone 5 einerseits, die in der zweiten Trocknungszone 6 andererseits, sind mit unterschiedlicher Strahlungsintensität betreibbar und entsprechend steuerbar oder regelbar. Man könnte eine Mehrzahl von offenen Förderrinnen 1 sowie eine entsprechende Mehrzahl von nachgeschalteten Förderern 4 parallel anordnen und betreiben. Im Ergebnis wird die Strahlungstrocknung in der offenen Förderrinne 1 in zwei Zonen 5, 6 durchgeführt. In der ersten Zone 5 werden eine Erhitzung sowie eine damit verbundene thermische Trocknung des Roh-Faulschlammes bis zum Beginn der Bildung der Leimphasen durchgeführt, was im Bereich 7 geschieht. Die Fördergeschwindigkeit, das Volumen des Roh-Faulschlammes und die Strahlungsintensität der Strahlungstrocknung sind so eingerichtet, daß die entstehende Leimphase in der zweiten Zone 6 in schneckenförderfähige Konglomerate zerfällt. Die Konglomerate werden aus der offenen Förderrinne 1 ausgetragen. Sie können danach ohne weiteres z. B. in zumindest einen geschlossenem Schneckenförderer mit Schneckenförderzylinder als nachgeschalteten Förderer 4 eingeführt und in diesem einer zusätzlichen Kontakttrocknung unterworfen werden, wozu dieser Förderer 4 mit einem fluiden Wärmeträger beheizt wird und wobei auch dieser eine Einrichtung für den Brüdenabzug aufweist. Arbeitet man nach dem erfindungsgemäßen Verfahren in der beschriebenen Anlage und bilden sich in der ersten Trocknungszone 5 und/oder in der zweiten Trocknungszone anstelle der Konglomerate ballförmige Körper aus einer erhärteten Schale und einem noch leimphasigen Kern, so kann dieser nicht optimale Betriebszustand durch Änderung der Fördergeschwindigkeit in der Förderrinne, Änderung der Strahlungsintensität und/oder Änderung des Aufgabemengenstromes für den Roh-Faulschlamm überwunden werden.

Die in der Fig. 4 dargestellte Anlage arbeitet mit einem Bandförderer 11, der einerseits eine Einrichtung 12 für eine schichtförmige Rohschlammaufgabe und andererseits eine Abwurfeinrichtung 13 aufweist, eine oberhalb und längs des Bandförderers 11 angeordnete Strahlungsheizeinrichtung 14 und ein nachgeordneter, beheizter Schneckenförderer 15. Der Einrichtung 12 für die schichtförmige Rohschlammaufgabe ist ein Bunker 16 zugeordnet, der über eine entsprechende Dickstoffpumpfe 17 mit dem Roh-Faulschlamm bedient wird. Die Strahlungsheizeinrichtung 14 besteht im Ausführungsbeispiel aus zwei Abteilungen, die zwei Zonen 18, 19 für eine Strahlungsbeheizung der Rohschlammschicht 20 bilden. Die beiden Zonen 18, 19 sind über die Strahlungsheizeinrichtung 14 unabhängig voneinander steuerbar und/oder regelbar. Die Auslegung der Anlage insgesamt ist so getroffen, daß die Rohschlammaufgabe sowie damit die Schlammdicke der Rohschlammschicht 20 und die Fördergeschwindigkeit so steuerbar und/oder regelbar sind, daß aus der zweiten Zone 19 schneckenförderfähige Konglomerate 21 von dem Bandförderer 11 abnehmbar sind, die dem nachgeordneten Schneckenförderer 15 aufgebbar sind. Das wurde nur schematisch angedeutet. Man erkennt, daß man den Bandförderer 11 in einer Trockenkammer anordnen könnte, die ebenso wie der nachgeordnete Schneckenförderer 15 einen Brüdenabzug aufweist. Auch könnten mehrere Bandförderer 11 und mehere Schneckenförderer 15 parallel angeordnet und betreibbar sein. In der ersten, an die Einrichtung 12 für die Rohschlammaufgabe anschließenden Zone 18 wird eine thermische Trocknung bis zum Beginn der Leimphase durchgeführt. Die Fördergeschwindigkeit, die Dicke der Rohschlammschicht 20 und die Strahlungsintensität der Strahlungstrocknung werden so eingerichtet, daß die entstehende Leimphase am Ende der zweiten Zone 19 von dem Bandförderer 11 in Form von schneckenförderfähigen Konglomeraten 21 abnehmbar ist. Diese Konglomerate 21 treten in den angeschlossenen beheizten Schneckenförderer 15 ein. Im Ausführungsbeispiel werden die gebildeten oder sich beim Abnehmen bildenden Konglomerate 21 mit Hilfe eines Schabers 22 abgenommen. Der Bandförderer 11 kann zusätzlich beheizt sein, so daß Kontaktwärme über das Förderband abgegeben wird. Die Strahlungstrocknung in den beiden Zonen 18, 19 wird, wie bereits erwähnt, mit unterschiedlicher Strahlungsintensität durchgeführt. Die Behandlung in der zweiten Zone 19 beginnt bei 23, sobald die Temperatur in der Rohschlammschicht 20 auf über 100° C ansteigt oder gerade angestiegen ist. Auf diese Weise wird die Leimphase in statu nascendi der konglomeratbildenden Strahlungstrocknung ausgesetzt und die Konglomerate 21 können sicher abgenommen und problemlos in dem nachgeschalteten Schneckenförderer 15 weiter behandelt werden. Sollten sich auf dem Bandförderer 11 aus dem Roh-Faulschlamm ballförmige Körper mit verhältnismäßig harter Schale und Leimphase im innern bilden, so läßt sich dieses durch Einstellung der Verfahrensparameter, insbesondere durch eine Dosierung der Aufgabemenge des Roh-Faulschlammes verhindern.

## Patentansprüche

1. Verfahren zum Betrieb einer Anlage zum Trocknen von Faulschlamm, welche Anlage
zumindest einen kontinuierlichen Förderer für den Roh-Faulschlamm
und eine Einrichtung für eine Strahlungstrocknung des Roh-Faulschlammes aufweist,
wobei in einer ersten, an die Rohschlammaufgabe anschließenden Zone eine thermische Trocknung bis zum Beginn der Ausbildung einer Leimphase durchgeführt wird,
wobei in der anschließenden zweiten Zone die Strahlungstrocknung so eingerichtet wird, daß die entstehende Leimphase in der zweiten Zone in Konglomerate transformiert wird, die schüttgutartig förderbar sind,
und wobei die Konglomerate von dem kontinuierlichen Förderer abwerfbar sind.

2. Verfahren nach Anspruch 1 zum Betrieb einer Anlage zum Trocknen von Faulschlamm, welche Anlage
eine Trocknungskammer,
zumindest einen Heizstrahler im oberen Bereich der Trocknungskammer für eine Strahlungstrocknung und
zumindest einen Schneckenförderer mit nach oben offener Förderrinne und Förderschnecke sowie einen Brüdenabzug
aufweist, wobei der Heizstrahler oberhalb und längs der Förderrinne angeordnet ist und der Roh-Faulschlamm an einer Seite dem Schneckenförderer mit einem Trockensubstanzgehalt von 15 bis 30 Gew.-%, vorzugsweise etwa 25 Gew.-%, aufgegeben wird sowie von dem Schneckenförderer mit erhöhtem Trockensubstanzgehalt abgegeben wird, und wobei die Kombination der folgenden Merkmale verwirklicht wird:
a) die Strahlungstrocknung in dem Schneckenförderer wird in zumindest zwei Zonen durchgeführt,
b) in der ersten Zone werden längs des Förderweges des Schneckenförderers eine Erhitzung sowie eine damit verbundene thermische Trocknung des Roh-Faulschlammes bis zum Beginn der Leimphase durchgeführt,
c) die Fördergeschwindigkeit, das Volumen des Roh-Faulschlammes und die Strahlungsintensität der Strahlungstrocknung werden in der Behandlungsstufe der zweiten Zone so eingerichtet, daß die entstehende Leimphase in der zweiten Zone in schneckenförderfähige Konglomerate zerfällt,
wobei die Konglomerate aus der Förderrinne ausgetragen werden.

3. Verfahren nach Anspruch 1 zum kontinuierlichen Trocknen von Faulschlamm der einen Trockensubstanzgehalt von 15 bis 30 Gew.-%, vorzugsweise etwa 25 Gew.-%, aufweist, wobei die Kombination der folgenden Verfahrensschritte verwirklicht ist:
a) Der Roh-Faulschlamm wird einem Bandförderer, der an seinem Ende eine Abwurfeinrichtung aufweist, in Form einer Rohschlammschicht aufgegeben,
b) die Rohschlammschicht wird mit Hilfe einer Strahlungstrocknungseinrichtung, die sich oberhalb und längs des Bandförderers erstreckt, einer Strahlungstrocknung unterworfen, die zwei Trocknungszonen aufweist,
c) in der ersten, an die Rohschlammaufgabe anschließenden Zone wird eine thermische Trocknung bis zum Beginn der Leimphase durchgeführt,
d) die Fördergeschwindigkeit, die Dicke der Rohschlammschicht und Strahlungsintensität der Strahlungstrocknung werden so eingerichtet, daß die entstehende Leimphase am Ende der zweiten Zone von dem Bandförderer in Form von schneckenförderfähigen Konglomeraten abnehmbar oder abwerfbar ist,
wobei die Konglomerate in einen angeschlossenen beheizten Schneckenförderer eingeführt und in diesem einer Nachtrocknung unterworfen werden.

4. Verfahren nach Anspruch 3, wobei die Rohschlammschicht auf den Bandförderer zusätzlich über das Förderband beheizt wird.

5. Verfahren nach einem der Ansprüche 1 bis 3, wobei die Strahlungstrocknung in den beiden Zonen mit unterschiedlicher Strahlungsintensität durchgeführt wird.

6. Verfahren nach einem der Ansprüche 1 bis 5, wobei die Behandlung in der zweiten Zone eingeleitet wird, sobald die Temperatur in der Rohschlammschicht auf über 100° C ansteigt oder gerade angestiegen ist.

7. Verfahren nach einem der Ansprüche 1 bis 6, wobei die Leimphase in der zweiten Zone in statu nascendi der konglomeratbildenden Strahlungstrocknung ausgesetzt wird.

8. Verfahren nach einem der Ansprüche 1 bis 7, wobei die Konglomerate im Bereich der Abwurfeinrichtung des Bandförderers mittels Schaber abgenommen werden.

9. Verfahren nach einem der Ansprüche 1 bis 8, wobei die Rohschlammschicht in dem Förderer bzw. auf dem Förderer bis zu einem Trockensubstanzgehalt von zumindest 65 Gew.-% getrocknet wird.

10. Anlage für die Durchführung des Verfahrens nach einem der Ansprüche 2 sowie 5 bis 9, - mit
einer offenen Förderrinne (1) und einer darin angeordneten Förderschnecke (2),
einer Strahlungstrocknungseinrichtung (3) mit zumindest einem Heizstrahler und
einem nachgeschalteten Förderer (4),
wobei die Förderrinne (1) eine erste Trocknungszone (5) und eine zweite Trocknungszone (6) aufweist, die über einen Bereich (7) beginnender Bildung der Leimphase ineinander übergehen, wobei die Fördergeschwindigkeit in der Förderrinne (1) sowie die Strahlungstrocknungseinrichtung (3) bezüglich der Strahlungsintensität so eingerichtet sind, daß die sich bildende Leimphase in Konglomerate zerfällt, die schneckenförderbar sind, und daß der nachgeschaltete Förderer (4) für die Nachtrocknung der Konglomerate eingerichtet ist.

11. Anlage nach Anspruch 10, wobei die offene Förderrinne (1) eine offene schraubenwendelförmige Förderschnecke (2) aufweist.

12. Anlage nach einem der Ansprüche 10 oder 11, wobei der nachgeschaltete Förderer (4) als Schneckenförderer mit geschlossenem Förderschneckenzylinder und geschlossener Förderschnecke ausgebildet ist.

13. Anlage nach einem der Ansprüche 1 bis 12, wobei die offene Förderrinne (1) und/oder der nachgeschaltete Förderer (4) beheizt sind.

14. Anlage nach einem der Ansprüche 10 bis 13, wobei die Strahlungstrocknungseinrichtung (3) in der ersten Trockenzone (5) einerseits, in der zweiten Trockenzone (6) andererseits mit unterschiedlicher Strahlungsintensität betreibbar sind.

15. Anlage nach einem der Ansprüche 10 bis 14, wobei eine Mehrzahl von offenen Förderrinnen (1) sowie eine entsprechende Mehrzahl von nachgeschalteten Förderern (4) parallel angeordnet und betreibbar sind.

16. Anlage für die Durchführung des Verfahrens nach einem der Ansprüche 3 oder 4 sowie 5 bis 9, mit
einem Bandförderer (11), der einerseits eine Einrichtung für eine schichtförmige Rohschlammaufgabe und andererseits eine Abwurfeinrichtung (13) aufweist,
einer oberhalb und längs des Bandförderers (11) angeordneten Strahlungsheizeinrichtung (14) und
einem nachgeordneten, beheizten Schneckenförderer (15),
wobei die Strahlungsheizeinrichtung (14) zwei Zonen (18, 19) für eine Strahlungsbeheizung der Rohschlammschicht (20) aufweist, die unabhängig voneinander steuerbar und/oder regelbar sind, und wobei die Einrichtung (12) zur Rohschlammaufgabe sowie damit die Dicke der Rohschlammschicht (20) und die Fördergeschwindigkeit so steuerbar und/oder regelbar sind, daß aus der zweiten Zone (19) schneckenförderfähige Konglomerate (21) von dem Bandförderer (11) abnehmbar sind, die dem nachgeordneten Schneckenförderer (15) aufgebbar sind.

17. Anlage nach Anspruch 16, wobei mehrere Bandförderer (19) und mehrere Schneckenförderer (15) parallel angeordnet und betreibbar sind.

18. Anlage nach einem der Ansprüche 16 oder 17, wobei der Bandförderer (11) in einer Trockenkammer angeordnet ist, die ebenso wie der nachgeordnete Schneckenförderer (15) einen Brüdenabzug aufweist.
